# EUROPÄISCHE PATENTANMELDUNG

(11) **EP 4 506 117 A1**
(43) Veröffentlichungstag der Anmeldung: **12.02.2025**
(21) Anmeldenummer: 24190633.8
(22) Anmeldetag: 24.07.2024
(51) Int. Cl.: B25J 13/02, B25J 15/06, B25J 19/00, B66C 1/02

(54) **HANDHABUNGSANLAGE UMFASSEND SCHLAUCHHEBER UND MANIPULATOR MIT STEUERHEBEL**

(30) Priorität: 08.08.2023 DE 102023121133
(71) Anmelder: J. Schmalz GmbH, 72293 Glatten (DE)
(72) Erfinder: Frey, Matthias, 72172 Sulz-Dürrenmettstetten (DE); Bläse, Nico, 72160 Horb (DE)
(74) Vertreter: DREISS Patentanwälte PartG mbB

(57) **Zusammenfassung**

Die Erfindung betrifft eine Handhabungsanlage (10), umfassend einen Schlauchheber (12), mit einem Hubschlauch (16), einem Endeffektor (22) und einer Ventileinrichtung (70), einen Manipulator (14), und eine Kopplungseinrichtung (34) zur Ankopplung des Schlauchhebers an den Manipulator, wobei die Kopplungseinrichtung (34) einen Schlauchheber-seitigen ersten Kopplungsabschnitt (36) und einen Manipulator-seitigen zweiten Kopplungsabschnitt (38) aufweist, wobei der erste Kopplungsabschnitt entlang einer Steuerachse (27) axial verlagerbar an dem Hubschlauch (16) gehaltert ist, wobei der erste Kopplungsabschnitt mit der Ventileinrichtung derart zusammenwirkt, dass durch Verschieben des ersten Kopplungsabschnitts entlang der Steuerachse die Ventileinrichtung betätigbar ist.

## Beschreibung

Die Erfindung betrifft eine Handhabungsanlage, umfassend einen Schlauchheber und einen Manipulator zum Verlagern des Schlauchhebers.

Schlauchheber sind Unterdruck-Handhabungsvorrichtungen, mit welchen Lasten mit Hilfe von Unterdruck angehoben, gegebenenfalls verlagert und wieder abgesetzt werden können. Die Hubbewegung wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist. An einem Ende des Hubschlauchs ist üblicherweise ein Endeffektor zum Greifen eines Gegenstands angeordnet, insbesondere in Form einer Sauggreifvorrichtung.

Schlauchheber mit Hubschlauch und Sauggreifvorrichtung sind beispielsweise aus der EP3078620A1 oder aus der EP3904269A1 bekannt.

Solche Schlauchheber werden üblicherweise manuell bedient, bspw. über eine an dem Hubschlauch angeordnete Bedienvorrichtung, mittels welcher der Hubschlauch verlagert werden kann und eine Unterdruckzufuhr zu dem Hubschlauch gesteuert werden kann.

Es sind auch Handhabungsanlagen bekannt, bei welchen ein Schlauchheber automatisiert mittels eines Roboters verlagerbar ist.

Der vorliegenden Erfindung liegt die Aufgabe zugrunde, eine automatisierte Steuerung eines Schlauchhebers weiter zu verbessern, insbesondere im Hinblick auf einen kollaborierenden Betrieb mit einer Person.

Diese Aufgabe wird erfindungsgemäß durch eine Handhabungsanlage mit den Merkmalen des Anspruchs 1 gelöst. Die Handhabungsanlage ist zum Handhaben von Gegenständen ausgebildet, insbesondere zum Anheben, Verlagern und wieder Absetzen eines Gegenstands.

Die Handhabungsanlage umfasst einen Schlauchheber. Der Schlauchheber umfasst einen Hubschlauch und einen Endeffektor zum Greifen eines Gegenstandes, insbesondere eine Sauggreifvorrichtung. Der Hubschlauch erstreckt sich entlang einer Hubschlauch-Längsachse und weist einen Schlauchinnenraum auf. Der Hubschlauch ist durch Beaufschlagung des Schlauchinnenraums mit Unterdruck verkürzbar und durch Belüften des Schlauchinnenraums (also durch Einströmen von Luft, insbesondere Umgebungsluft, in den Schlauchinnenraum) wieder verlängerbar. Die Handhabungsanlage kann außerdem eine Unterdruckerzeugungsvorrichtung zur Versorgung des Schlauchhebers mit Unterdruck umfassen. Vorzugsweise ist der Endeffektor, insbesondere bei einer Ausgestaltung als Sauggreifvorrichtung, durch den Schlauchinnenraum des Hubschlauchs hindurch mit Unterdruck versorgbar. Der Hubschlauch kann beispielsweise an einem dem Endeffektor abgewandten Ende an einem Träger oder einer Gebäudedecke befestigt sein, sodass er vertikal nach unten hängt. Insbesondere kann der Schlauchheber einen von dem Manipulator separat bereitgestellten Träger aufweisen, an dem der Hubschlauch mit einem dem Endeffektor abgewandten Ende befestigt ist. Der Träger kann beispielsweise durch ein Gerüst bereitgestellt sein. Der Träger kann auch Teil einer Haltevorrichtung zur Halterung des Hubschlauchs an einer Gebäudedecke sein.

Der Schlauchheber weist außerdem eine Ventileinrichtung zur Steuerung von Strömungsverbindungen auf, insbesondere zur Steuerung einer Strömungsverbindung zwischen dem Schlauchinnenraum und einer Umgebung und/oder einer Strömungsverbindung zwischen dem Schlauchinnenraum und dem Endeffektor (Sauggreifvorrichtung). Die Ventileinrichtung kann beispielsweise an oder in dem Hubschlauch angeordnet sein.

Die Handhabungsanlage umfasst außerdem einen Manipulator zum Verlagern des Endeffektors, insbesondere in einer zu der Hubschlauch-Längsachse orthogonalen, vorzugsweise horizontalen, Ebene. Vorzugsweise handelt es sich bei dem Manipulator um einen Roboter, weiter vorzugsweise um einen kollaborierenden Roboter (Cobot).

Die Handhabungsanlage umfasst außerdem eine Kopplungseinrichtung, mittels welcher der Schlauchheber, insbesondere wiederholbar lösbar, an den Manipulator ankoppelbar ist. Die Kopplungseinrichtung umfasst einen Schlauchheber-seitigen ersten Kopplungsabschnitt und einen Manipulator-seitigen zweiten Kopplungsabschnitt. Der Manipulator-seitige zweite Kopplungsabschnitt ist insbesondere mit dem Manipulator, bspw. einem Roboterarm, vorzugsweise fest, verbunden.

Die Kopplungseinrichtung umfasst außerdem eine Verbindungseinrichtung, mittels welcher der erste und der zweite Kopplungsabschnitt, vorzugsweise wiederholbar lösbar, miteinander verbindbar oder verbunden sind. Im verbundenen Zustand von erstem und zweitem Kopplungsabschnitt bilden Schlauchheber und Manipulator insofern vorzugsweise eine Bewegungseinheit, sodass eine Verlagerungsbewegung des Manipulators in einer zu der Steuerachse orthogonalen Ebene in eine entsprechende Verlagerungsbewegung des Schlauchhebers übertragen wird.

Der erste Kopplungsabschnitt ist entlang einer Steuerachse axial verlagerbar an dem Hubschlauch gehaltert, insbesondere zwischen einer dem Hubschlauch nahen ersten Endposition und einer von dem Hubschlauch entfernten zweiten Endposition. Die Steuerachse verläuft vorzugsweise zu der Hubschlauch-Längsachse parallel oder kollinear. Insbesondere kann die Kopplungseinrichtung derart ausgebildet sein, dass - im verbundenen Zustand von erstem und zweitem Kopplungsabschnitt - eine Verlagerungsbewegung des Manipulator-seitigen zweiten Kopplungsabschnitts in einer zu der Steuerachse orthogonalen Verlagerungsebene (in Folge einer Bewegung des Manipulators) in eine Bewegung des Hubschlauchs in dieser Verlagerungsebene übertragen wird, eine Verlagerungsbewegung des Manipulator-seitigen zweiten Kopplungsabschnitts entlang einer zu der Steuerachse parallelen Achse (also orthogonal zu der Verlagerungsebene) jedoch nicht in eine Verlagerungsbewegung des Hubschlauchs übertragen wird.

Der erste Kopplungsabschnitt wirkt mit der Ventileinrichtung derart zusammen, dass durch Verschieben des ersten Kopplungsabschnitts entlang der Steuerachse die Ventileinrichtung betätigbar, insbesondere steuerbar, ist.

Bei der vorgeschlagenen Lösung kann insofern die Ventileinrichtung durch eine Verlagerungsbewegung des Manipulators gesteuert werden und somit der Schlauchheber automatisiert betrieben werden. Vorzugsweise umfasst die Ventileinrichtung ein Hubschlauch-Belüftungsventil zum Belüften des Schlauchinnenraums des Hubschlauchs. Das Hubschlauch-Belüftungsventil kann insbesondere dazu ausgebildet sein, einen Zustrom von Umgebungsluft in den Schlauchinnenraum und somit eine Längenänderung des Hubschlauchs zu steuern. Der erste Kopplungsabschnitt kann dann mit dem Hubschlauch-Belüftungsventil derart zusammenwirken, dass durch Verschieben des ersten Kopplungsabschnitts entlang der Steuerachse eine Belüftungsstellung des Hubschlauch-Belüftungsventils veränderbar ist, insbesondere das Hubschlauch-Belüftungsventil wahlweise geöffnet oder geschlossen werden kann. Insofern kann durch Verschieben des ersten Kopplungsabschnitts entlang der Steuerachse eine Verkürzung oder Verlängerung des Hubschlauchs entlang der Hubschlauch-Längsachse gesteuert werden. Eine solche Ausgestaltung ermöglicht eine Steuerung einer Länge des Hubschlauchs und somit einer von dem Hubschlauch ausgeübten Hubkraftwirkung durch Bewegung des Manipulators, was eine automatisierte Bedienung ermöglicht.

Bei der vorgeschlagenen automatisierten Steuerung des Schlauchhebers ist es von Vorteil, wenn die Kopplungseinrichtung bzw. die Verbindungseinrichtung dazu ausgebildet ist, den Manipulator bedarfsweise, insbesondere in einer Notsituation wie bspw. bei einem Energieausfall, automatisch von dem Schlauchheber abzukoppeln. Dies ermöglicht es beispielsweise, dass der Manipulator im abgekoppelten Zustand automatisiert in eine Sicherheitskonfiguration verfährt, in welcher keine Gefahr für eine sich möglicherweise im gleichen Arbeitsbereich befindliche Person ausgeht. Auf diese Weise kann eine Sicherheitsfunktion bereitgestellt werden, insbesondere ohne dass zusätzlich externe Sicherungsmaßnahmen (z.B. Schutzzäune um eine Handhabungsanlage oder eine unterbrechungsfreie Stromversorgung) zwingend erforderlich sind.

Dies kann in vorteilhafter Weise dadurch realisiert sein, dass die Verbindungseinrichtung derart ansteuerbar ausgebildet ist, dass sie wahlweise aktivierbar oder deaktivierbar ist, insbesondere wiederholbar aktivierbar, deaktivierbar und wieder aktivierbar. Insofern ist die Verbindungseinrichtung insbesondere derart ansteuerbar, dass eine den ersten Kopplungsabschnitt und den zweiten Kopplungsabschnitt miteinander koppelnde Verbindungswirkung der Verbindungseinrichtung wahlweise aktivierbar oder deaktivierbar ist, insbesondere aktivierbar, deaktivierbar und wieder aktivierbar ist. Insbesondere ist die Verbindungseinrichtung derart ausgebildet, dass in dem aktivierten Zustand der erste und der zweite Kopplungsabschnitt miteinander verbunden sind, und in dem deaktivierten Zustand der erste und der zweite Kopplungsabschnitt voneinander werkzeugfrei lösbar sind. Die Handhabungsanlage kann dann vorzugsweise eine Steuerung zum Ansteuern der Verbindungseinrichtung aufweisen. Bei der Steuerung kann es sich insbesondere um eine Manipulator-Steuerung, insbesondere Robotersteuerung, handeln. Es ist auch denkbar, dass es sich bei der Steuerung um eine externe Steuerung handelt, bspw. als Teil einer übergeordneten Steuerung der Handhabungsanlage.

Eine vorteilhafte Realisierungsform der Verbindungseinrichtung kann darin bestehen, dass die Verbindungseinrichtung wenigstens einen bedarfsweise aktivierbaren oder deaktivierbaren Elektromagneten aufweist. Der wenigstens eine Elektromagnet ist vorzugsweise derart ausgebildet, dass in einem aktivierten, insbesondere bestromten, Betriebszustand des wenigstens einen Elektromagneten der erste und der zweite Kopplungsabschnitt miteinander verbunden sind, und in einem deaktivierten, insbesondere unbestromten, Betriebszustand des wenigstens einen Elektromagneten der erste und der zweite Kopplungsabschnitt voneinander werkzeugfrei lösbar sind. Auf diese Weise ist auf einfache konstruktive Weise eine Sicherheitsfunktion geschaffen, da bei einem Stromausfall die Magnetwirkung des wenigstens einen Elektromagneten automatisch nachlässt und somit erster und zweiter Kopplungsabschnitt (und infolgedessen Manipulator und Schlauchheber) automatisch voneinander getrennt werden. Es ist möglich, dass der erste und der zweite Kopplungsabschnitt im aktivierten Betriebszustand durch die Magnetkraftwirkung des Elektromagneten direkt miteinander verbunden sind. Es ist auch denkbar, dass der Elektromagnet eine Verbindungsvorrichtung betätigt. Der wenigstens eine Elektromagnet kann an dem ersten Kopplungsabschnitt und/oder an dem zweiten Kopplungsabschnitt angeordnet sein.

In diesem Zusammenhang kann es außerdem vorteilhaft sein, wenn die Verbindungseinrichtung einen Energiespeicher, bspw. Kondensator, aufweist. Der Energiespeicher ist insbesondere dazu ausgebildet, den wenigstens einen Elektromagneten mit der erforderlichen Energie zu versorgen, um den aktivierten Betriebszustand zumindest kurzzeitig aufrechtzuerhalten. Dies ermöglicht es, den wenigstens einen Elektromagnet auch bei einem Stromausfall für eine gewisse Zeit im aktivierten (bestromten) Betriebszustand (und somit ersten und zweiten Kopplungsabschnitt im verbundenen Zustand) zu halten, bspw. solange, bis der Manipulator bzw. Roboter in eine Sicherheitsposition verfahren ist. Der Energiespeicher kann Manipulator-seitig oder Schlauchheber-seitig angeordnet sein.

Für den automatisierten Betrieb der Handhabungsanlage, insbesondere bei einem kollaborierenden Betrieb in einem gemeinsamen Arbeitsbereich mit einer Person, ist es zudem wichtig, dass die Steuerung der Ventileinrichtung robust und in der Bedienung zuverlässig ausgebildet ist. Eine besonders zuverlässige Steuerung kann dadurch realisiert sein, dass der erste Kopplungsabschnitt über einen Steuerhebel mit der Ventileinrichtung gekoppelt ist, wobei der Steuerhebel um eine Steuerhebel-Schwenkachse schwenkbar an dem Hubschlauch gehaltert, insbesondere gelagert, ist. Der Steuerhebel weist vorzugsweise einen Betätigungsabschnitt auf, welcher mit der Ventileinrichtung derart zusammenwirkt, dass die Ventileinrichtung durch Verschwenken des Steuerhebels um die Steuerhebel-Schwenkachse betätigbar ist, also insbesondere eine Ventilstellung der Ventileinrichtung veränderbar ist. Der Steuerhebel und der erste Kopplungsabschnitt wirken insofern derart zusammen, dass durch axiale Verlagerung des ersten Kopplungsabschnitts entlang der Steuerachse der Schwenkhebel um die Steuerhebel-Schwenkachse schwenkbar ist.

Die vorgeschlagene Ausgestaltung mit Steuerhebel ermöglicht neben einer zuverlässigen Ansteuerung zudem - durch entsprechende Ausgestaltung des Steuerhebels - auch komplexere, insbesondere nichtlineare, Betätigungsvorgänge der Ventileinrichtung auf einfache Weise abzubilden, insbesondere ohne hierzu zwingend eine nichtlineare Verlagerungsbewegung mit dem Manipulator durchführen zu müssen.

Besonders vorteilhaft kann es sein, wenn der Steuerhebel eine Steuerkurve aufweist, beispielsweise in Form eines Steuerschlitzes. Die Steuerkurve kann beispielsweise durch eine lokale Aussparung oder ein Langloch in dem Steuerhebel ausgebildet sein. An dem ersten Kopplungsabschnitt kann dann wenigstens ein Steuerglied, beispielsweise in Form eines Stiftes, Bolzens oder einer Schraube, vorgesehen sein, welches in die Steuerkurve des Steuerhebels eingreift. Die Steuerkurve kann insofern eine Kulissenführung für das Steuerglied bilden. Die Steuerkurve ist vorzugsweise derart ausgebildet, dass in Abhängigkeit einer Position des Steuerglieds entlang der Steuerkurve eine Schwenklage des Steuerhebels um die Steuerhebel-Schwenkachse und somit eine Ventilstellung der Ventileinrichtung einstellbar ist. Eine solche Ausgestaltung der Steuerkurve ermöglicht es durch Ausgestaltung einer Form der Steuerkurve, auch komplexe, insbesondere nichtlineare, Steuerungen der Ventileinrichtung, insbesondere Belüftungsstellungen des Hubschlauch-Belüftungsventils, auf konstruktiv einfache Weise zu realisieren.

In vorteilhafter Weise kann die Steuerkurve eine Mehrzahl von unterschiedlich ausgebildeten Steuerkurvenabschnitten aufweisen. Beispielsweise kann die Steuerkurve einen ersten Steuerkurvenabschnitt aufweisen und einen sich an den ersten Steuerkurvenabschnitt anschließenden zweiten Steuerkurvenabschnitt. Beispielsweise ist es denkbar, dass die Steuerkurve einen ersten Steuerkurvenabschnitt und wenigstens einen zweiten Steuerkurvenabschnitt aufweist, wobei der erste und der zweite Steuerkurvenabschnitt derart ausgebildet sind, dass bei Verlagerung des Steuerglieds um eine Steuerstrecke entlang der Steuerachse der Steuerhebel bei Aufnahme des Steuergliedes in dem ersten Steuerkurvenabschnitt und um einen größeren Winkelbereich um die Steuerhebel-Schwenkachse verschwenkt wird als bei Aufnahme des Steuerglieds in dem zweiten Steuerkurvenabschnitt. Auf diese Weise können durch Verlagerung des Steuerglieds in unterschiedlichen Abschnitten der Steuerkurve unterschiedliche Ventilsteuerungen bereitgestellt werden, bspw. um ein unterschiedliches Ansprechverhalten des Hubschlauchs bei Verlagerung mit und ohne Gegenstand abbilden zu können.

Im Rahmen einer vorteilhaften Ausgestaltung kann die Steuerkurve wenigstens zwei, vorzugsweise drei, weiter vorzugsweise vier, zueinander winklig, selbst jedoch vorzugsweise gerade, ausgebildete Steuerkurvenabschnitte aufweisen. Insbesondere können die Steuerkurvenabschnitte ineinander übergehen. In Abhängigkeit der Neigung bzw. Steigung relativ zu der Steuerachse kann dann ein Ansprechverhalten der Ventileinrichtung, insbesondere eine Öffnungsgeschwindigkeit des Hubschlauch-Belüftungsventils, unterschiedlich sein.

Insbesondere kann die Steuerkurve derart ausgebildet sein, dass die Ventileinrichtung, insbesondere das Hubschlauch-Belüftungsventil, bei Anlage des Steuerglieds in einem ersten Steuerkurvenabschnitt der Steuerkurve sich in einer ersten Ventilstellung, insbesondere ersten Belüftungsstellung, befindet und bei Anlage in einem zweiten Steuerkurvenabschnitt der Steuerkurve sich in einer zweiten Ventilstellung, insbesondere zweiten Belüftungsstellung, befindet. Insbesondere ist die die Ventileinrichtung, insbesondere das Hubschlauch-Belüftungsventil, in der ersten Ventilstellung weiter geöffnet ist als in der zweiten Ventilstellung. Beispielsweise ist es denkbar, dass das Belüftungsventil in der ersten Ventilstellung vollständig oder teilweise geöffnet ist und in der zweiten Belüftungsstellung geschlossen oder teilweise geöffnet ist. Bei dem ersten Steuerkurvenabschnitt kann es sich insbesondere um einen ersten Endabschnitt der Steuerkurve handeln. Bei dem zweiten Steuerkurvenabschnitt kann es sich insbesondere um einen zweiten Endabschnitt der Steuerkurve handeln.

Bei einer vorteilhaften Weiterbildung kann der erste Kopplungsabschnitt über den Steuerhebel an dem Hubschlauch gehaltert sein, beispielsweise durch Eingreifen des Steuerglieds in die Steuerkurve. Insofern kann eine vom Hubschlauch beabstandete Endlage des ersten Kopplungsabschnitts beispielsweise durch eine Endlage des Steuergliedes in der Steuerkurve definiert sein.

Im Rahmen einer vorteilhaften Weiterbildung kann der erste Kopplungsabschnitt an dem Hubschlauch derart gehaltert sein, dass er im getrennten Zustand von erstem und zweitem Kopplungsabschnitt (also dann, wenn der erste und der zweite Kopplungsabschnitt nicht mittels der Verbindungseinrichtung verbunden sind) sich in einer Ruhekonfiguration entlang der Steuerachse befindet oder in diese schwerkraftbedingt überführt wird. Vorzugsweise wirkt der erste Kopplungsabschnitt in dieser Ruhekonfiguration mit der Ventileinrichtung, insbesondere dem Hubschlauch-Belüftungsventil, über den Steuerhebel derart zusammen (insbesondere ist der Steuerhebel in der Ruhekonfiguration des ersten Kopplungsabschnitts derart um die Steuerhebel-Schwenkachse verschwenkt), dass die Ventileinrichtung, insbesondere das Hubschlauch-Belüftungsventil, zumindest teilweise geöffnet ist, insbesondere derart, dass sich der Hubschlauch verlängert. Bei einer Ausgestaltung mit Steuerkurve ist es insbesondere denkbar, dass sich das Steuerglied in der Ruhekonfiguration des ersten Kopplungsabschnitts in dem vorstehend erwähnten ersten Endabschnitt der Steuerkurve befindet. Insbesondere kann das Hubschlauch-Belüftungsventil in der Ruhekonfiguration derart geöffnet sein, dass der Hubschlauch sich gemächlich verlängert oder in einer vorgegebenen Schwebeposition gehalten wird, was einen sicheren Betrieb der Handhabungsanlage auch bei Energieausfall begünstigt.

Eine vorteilhafte konstruktive Ausgestaltung der Handhabungsanlage kann darin bestehen, dass der Endeffektor über eine Verbindungsstange mit dem Hubschlauch verbunden ist. Die Verbindungsstange kann insbesondere die Steuerachse definieren. Die Verbindungsstange ist vorzugsweise an einem Ende mit dem Endeffektor drehfest verbunden und an dem anderen Ende um die Steuerachse drehbar mit dem Hubschlauch verbunden. Eine solche Verbindungsstange kann insbesondere als Angriffspunkt für den Manipulator dienen. Vorteilhafterweise kann der erste Kopplungsabschnitt zwischen dem ersten Ende und dem zweiten Ende der Verbindungsstange angeordnet sein.

In diesem Zusammenhang kann es besonders vorteilhaft sein, wenn der erste Kopplungsabschnitt an der Verbindungsstange derart angeordnet ist, insbesondere die Verbindungsstange derart umgreift, dass der erste Kopplungsabschnitt translatorisch (axial) entlang der Steuerachse, vorzugsweise auch rotatorisch um die Steuerachse, relativ zu der Verbindungsstange verlagerbar ist, vorzugsweise die Verbindungsstange und der erste Kopplungsabschnitt aber in einer zu der Steuerachse orthogonalen Richtung formschlüssig zusammenwirken. Insofern werden Bewegungen des ersten Kopplungsabschnitts entlang der Steuerachse insbesondere nicht auf die Verbindungsstange übertragen, Bewegungen des ersten Kopplungsabschnitts orthogonal zu der Steuerachse vorzugsweise aber schon. Insbesondere kann der erste Kopplungsabschnitt an der Verbindungsstange drehbar gelagert sein. Beispielsweise kann der erste Kopplungsabschnitt ein Kugellager umfassen, über welches der erste Kopplungsabschnitt an der Verbindungsstange gelagert ist.

Eine vorteilhafte Weiterbildung kann darin bestehen, dass die Verbindungsstange eine integrierte Fluidführung, insbesondere Unterdruckführung, zur Versorgung des Endeffektors mit Fluid, insbesondere Unterdruck, aufweist. Die Fluidführung erstreckt sich vorzugsweise von dem ersten Ende der Verbindungsstange zu dem zweiten Ende, also insbesondere von Hubschlauch zu Endeffektor. Die Fluidführung ist vorzugsweise an einem Ende mit dem Schlauchinnenraum des Hubschlauchs und an dem anderen Ende mit dem Endeffektor strömungsverbunden. Eine solche Ausgestaltung ermöglicht es, den Endeffektor durch die Verbindungsstange hindurch mit Unterdruck zu versorgen, wodurch bspw. Störkonturen durch außenliegende Fluidleitungen reduziert werden können. Beispielsweise kann die Verbindungsstange als Verbindungsrohr mit innenliegender Fluidführung ausgebildet sein.

Im Rahmen einer vorteilhaften Weiterbildung kann der Endeffektor um eine, zu der Steuerachse vorzugsweise parallele oder dieser entsprechende, Endeffektor-Drehachse drehbar an dem Hubschlauch gehaltert, insbesondere gelagert sein. Bei einer Ausgestaltung mit Verbindungsstange kann der Endeffektor über die Verbindungsstange an dem Hubschlauch gehaltert sein.

Um eine Drehbewegung des Endeffektors um die Endeffektor-Drehachse antreiben zu können, kann es vorteilhaft sein, wenn der Manipulator ein angetriebenes Drehglied, welches um eine Manipulator-Drehachse drehbar ist. Insbesondere kann das Drehglied durch eine angetriebene Manipulator-Drehachse, insbesondere Roboterachse, angetrieben oder gebildet sein. Dann kann es ferner vorteilhaft sein, wenn die Kopplungseinrichtung außerdem ein Getriebe umfasst, welches dazu ausgebildet ist, um im verbundenen Zustand von erstem und zweitem Kopplungsabschnitt (also dann, wenn der erste Kopplungsabschnitt und der zweite Kopplungsabschnitt mittels der Verbindungseinrichtung verbunden sind) ein Drehmoment zwischen Drehglied und Endeffektor zu übertragen. Insbesondere ist das Getriebe dazu ausgebildet, um eine Drehbewegung des Drehglieds um die Manipulator-Drehachse in eine Drehbewegung des Endeffektors um die Endeffektor-Drehachse zu übersetzen, vorzugsweise ohne dass dabei der erste und der zweite Kopplungsabschnitt verlagert wird.

Bei einer solchen Ausgestaltung wird insofern eine Drehachse des Manipulators zum Antrieb einer Drehbewegung des Endeffektors und somit einer Drehbewegung eines vom Endeffektor gehaltenen Gegenstands genutzt. Somit ist es insbesondere nicht erforderlich, zusätzliche Antriebseinrichtungen am Schlauchheber vorzusehen, um den Endeffektor zu drehen, was eine kostengünstige Ausgestaltung begünstigt. Zudem kann auf diese Weise eine Gewichtskraft am Schlauchheber reduziert werden, was eine präzisere Steuerung des Steuerhebels begünstigt.

Vorzugsweise ist das Getriebe derart ausgebildet, dass eine Drehbewegung des Endeffektors um die Endeffektor-Drehachse von einer Bewegung des ersten und des zweiten Kopplungsabschnitts entkoppelt ist. Mit anderen Worten ist das Getriebe insbesondere derart ausgebildet, dass eine Drehbewegung des Drehglieds um die Manipulator-Drehachse nicht in eine Verlagerungsbewegung des ersten und zweiten Kopplungsabschnitts übersetzt wird. Insofern ist das Getriebe insbesondere derart ausgebildet, dass eine Drehbewegung des Endeffektors um die Endeffektor-Drehachse auch bei feststehendem ersten und zweitem Kopplungsabschnitt (und somit bei feststehendem Hubschlauch) durch das Drehglied antreibbar ist. Eine Drehbewegung des Endeffektors um die Endeffektor-Drehachse ist insofern auch nicht durch eine Bewegung des Manipulators in einer Ebene orthogonal zu der Endeffektor-Drehachse eingeschränkt. Insbesondere sind auch Drehungen von 360° und mehr möglich.

Im Rahmen einer vorteilhaften Ausgestaltung kann der Manipulator als Roboter mit einem Roboterarm und einem Roboterhandgelenk ausgebildet sein. Dann kann das Drehglied insbesondere durch eine Drehachse des Roboter-Handgelenks angetrieben oder bereitgestellt sein. In vorteilhafter Weise kann es sich bei dem Manipulator um einen 6-Achs-Roboter, insbesondere einen kollaborierenden 6-Achs-Roboter, handeln. Dann kann das Drehglied vorzugsweise durch die entlang der kinematischen Kette letzte, sechste Achse des Roboters angetrieben oder gebildet sein.

Das Getriebe umfasst insbesondere ein Endeffektor-seitiges erstes Übertragungsglied und ein Manipulator-seitiges zweites Übertragungsglied. Das Endeffektor-seitige erste Übertragungsglied ist insbesondere mit dem Endeffektor derart gekoppelt, dass eine Drehbewegung des ersten Übertragungsglieds in eine Drehbewegung des Endeffektors um die Endeffektor-Drehachse übertragen wird. Vorzugsweise ist das erste Übertragungsglied mit dem Endeffektor um die Endeffektor-Drehachse drehfest gekoppelt. Das Manipulator-seitige zweite Übertragungsglied ist insbesondere durch das Drehglied des Manipulators antreibbar oder angetrieben.

Das erste und das zweite Übertragungsglied sind vorzugsweise derart ausgebildet, dass sie im verbundenen Zustand von erstem und zweitem Kopplungsabschnitt (also dann, wenn erster und zweiter Kopplungsabschnitt über die Verbindungseinrichtung miteinander verbunden sind) miteinander in Eingriff stehen, insbesondere derart, dass ein Drehmoment zwischen dem ersten Übertragungsglied und dem zweiten Übertragungsglied übertragbar ist.

Um ein wiederholtes Ab- und Ankoppeln des Manipulators an den Schlauchheber zu begünstigen, kann es ferner vorteilhaft sein, wenn das erste Übertragungsglied und das zweite Übertragungsglied derart ausgebildet sind, dass sie wiederholbar in Eingriff und außer Eingriff bringbar sind, insbesondere durch eine translatorische Verschiebung relativ zueinander, vorzugsweise entlang einer zu der Endeffektor-Drehachse orthogonalen Richtung.

Im Rahmen einer bevorzugten Ausgestaltung können das erste Übertragungsglied und das zweite Übertragungselement jeweils als Zahnrad ausgebildet sind. Insofern kann das Getriebe ein Endeffektor-seitiges erstes Zahnrad umfassen, welches vorzugsweise mit dem Endeffektor um die Endeffektor-Drehachse drehfest gekoppelt ist, und ein Manipulator-seitiges zweites Zahnrad, welches durch das Drehglied des Manipulators antreibbar ist, wobei das erste Zahnrad und das zweite Zahnrad im verbundenen Zustand von erstem und zweitem Kopplungsabschnitt miteinander kämmen, d.h. in kämmendem Eingriff miteinander stehen. Eine Ausgestaltung des Getriebes als Zahnradgetriebe ermöglicht eine besonders zuverlässige und präzise Kraftübertragung. Darüber hinaus ermöglicht eine Ausgestaltung der Übertragungsglieder als Zahnräder eine einfach lösbare Kupplung zwischen erstem und zweitem Übertragungsglied.

Im Rahmen einer alternativen vorteilhaften Ausgestaltung ist es auch denkbar, dass die Übertragungsglieder als Reibräder ausgebildet sind.

Darüber hinaus kann es vorteilhaft sein, wenn das Getriebe außerdem ein Manipulator-seitiges drittes Übertragungsglied (insbesondere drittes Zahnrad) aufweist, welches mit dem Drehglied um die Manipulator-Drehachse drehfest gekoppelt ist. Das dritte Übertragungsglied (insbesondere drittes Zahnrad) ist insofern insbesondere um die Manipulator-Drehachse drehbar. Das dritte Übertragungsglied (dritte Zahnrad) kann mit dem zweiten Übertragungsglied (zweiten Zahnrad) derart in, insbesondere kämmendem, Eingriff stehen, dass das zweite Übertragungsglied (zweite Zahnrad) durch das dritte Übertragungsglied (drittes Zahnrad) antreibbar ist. Das zweite Übertragungsglied ist insofern insbesondere zur Übertragung einer Drehbewegung des dritten Übertragungsglieds auf das erste Übertragungsglied ausgebildet. Bei einer solchen Ausgestaltung ist das zweite Übertragungsglied (zweite Zahnrad) dann vorzugsweise zwischen dem ersten Übertragungsglied (ersten Zahnrad) und dem dritten Übertragungsglied (dritten Zahnrad) angeordnet. Eine solche Ausgestaltung ermöglicht es, auf einfache konstruktive Weise eine Getriebeübersetzung unter Beibehaltung einer Drehrichtung zu realisieren.

Um eine Drehbewegung des Drehglieds auch in verschiedenen Verschiebelagen des ersten Kopplungsabschnitts entlang der Steuerachse auf den Endeffektor übertragen zu können, kann es vorteilhaft sein, wenn das Getriebe derart ausgebildet ist, dass das Endeffektor-seitige erste Übertragungsglied eine Längserstreckung entlang der Steuerachse bzw. der Endeffektor-Drehachse derart aufweist, dass das zweite Übertragungsglied auch dann, wenn es in Eingriff mit dem ersten Übertragungsglied steht (also dann, wenn der erste Kopplungsabschnitt mit dem zweiten Kopplungsabschnitt verbunden ist) axial entlang der Steuerachse bzw. Endeffektor-Drehachse relativ zu dem ersten Übertragungsglied verschiebbar ist. Bei einer Ausgestaltung des Getriebes als Zahnradgetriebe kann insofern das erste Zahnrad eine Längserstreckung entlang der Endeffektor-Drehachse derart aufweisen, dass das zweite Zahnrad im kämmenden Zustand axial entlang der Endeffektor-Drehachse relativ zu dem ersten Zahnrad verschiebbar ist. Vorzugsweise ist eine Längserstreckung des ersten Übertragungsglieds (ersten Zahnrads) entlang der Endeffektor-Drehachse wenigstens doppelt so groß wie eine Erstreckung des zweiten Übertragungsglieds entlang der Endeffektor-Drehachse, insbesondere wenigstens dreifach so groß, weiter insbesondere wenigstens 4-fach so groß, weiter insbesondere wenigstens 5-fach so groß.

Bei einer Ausgestaltung mit Verbindungsstange kann es ferner vorteilhaft sein, wenn eine Drehbewegung des Drehglieds um die Manipulator-Drehachse über die Verbindungsstange auf den Endeffektor übertragen wird. Beispielsweise kann das erste Endeffektor-seitige Übertragungsglied (erstes Zahnrad) koaxial zu der Verbindungsstange angeordnet sein und/oder mit der Verbindungsstange um die Endeffektor-Drehachse drehfest verbunden sein. Das erste Übertragungsglied (erstes Zahnrad) kann sich in vorteilhafter Weise axial entlang einer Längserstreckung der Verbindungsstange erstrecken. Insbesondere können eine Zahnradachse und eine Längsachse der Verbindungsstange zueinander kollinear verlaufen.

Die Erfindung wird im Folgenden anhand der Figuren näher erläutert. Es zeigen:
- Fig. 1: eine skizzierte Darstellung einer Ausgestaltung einer Handhabungsanlage mit Schlauchheber und Manipulator;

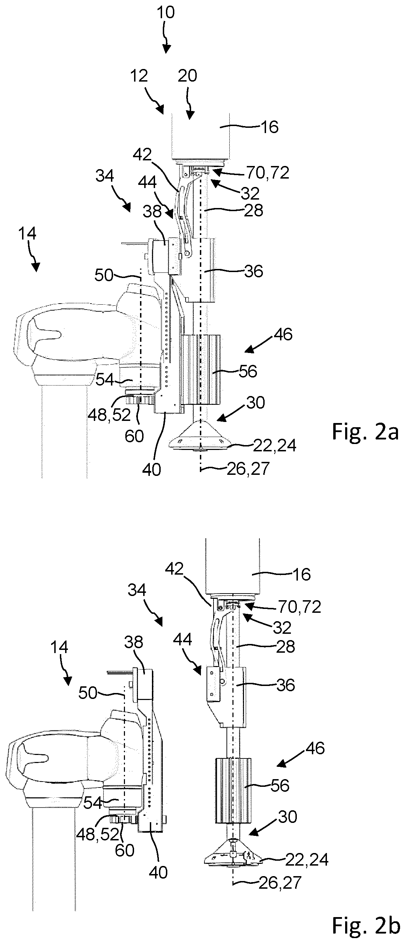

- Fig. 2a-b: skizzierte Darstellungen der Handhabungsanlage gemäß Fig. 1 bei angekoppeltem Schlauchheber (Ansicht a) und bei abgekoppeltem Schlauchheber (Ansicht b) in einer Seitenansicht;

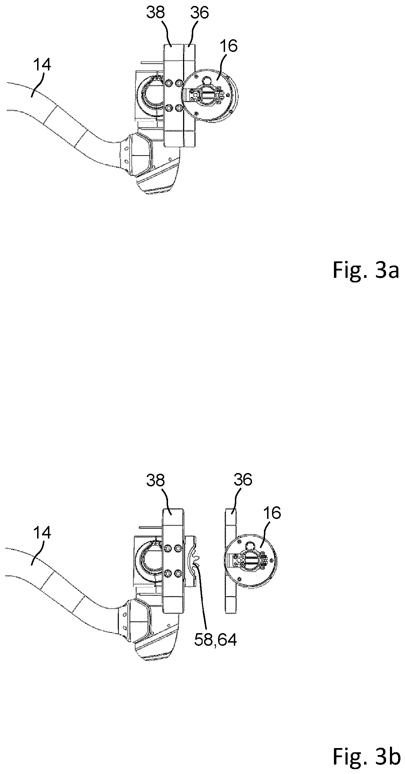

- Fig. 3a-b: skizzierte Darstellungen der Handhabungsanlage gemäß Fig. 1 bei angekoppeltem Schlauchheber (Ansicht a) und bei abgekoppeltem Schlauchheber (Ansicht b) in einer Draufsicht;
- Fig. 4: Detailansicht der Handhabungsanlage gemäß Fig. 1 zur Erläuterung des optionalen Getriebes; und
- Fig. 5: Detailansicht der Handhabungsanlage gemäß Fig. 1 im Bereich des Steuerhebels.
In der nachfolgenden Beschreibung sowie in den Figuren sind für identische oder einander entsprechende Merkmale jeweils dieselben Bezugszeichen verwendet.

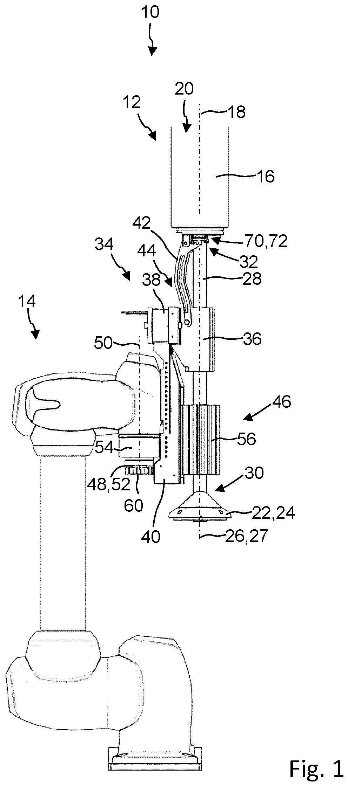

Die Figur 1 zeigt eine Handhabungsanlage, welche insgesamt mit dem Bezugszeichen 10 bezeichnet ist. Die Handhabungsanlage 10 umfasst einen Schlauchheber 12 und einen Manipulator 14.

Der Manipulator 14 ist als Roboter ausgebildet, vorzugsweise als kollaborierender Roboter. Im dargestellten Beispiel ist der Manipulator 14 beispielhaft als 6-Achs-Roboter ausgebildet.

Der Schlauchheber 12 umfasst einen Hubschlauch 16, welcher sich entlang einer Hubschlauch-Längsachse 18 erstreckt. Der Hubschlauch 16 umschließt einen Schlauchinnenraum 20. Der Hubschlauch 16 ist durch Beaufschlagen des Schlauchinnenraums 20 mit Unterdruck verkürzbar und durch Belüften des Schlauchinnenraums 20 wieder verlängerbar. Zu diesem Zweck kann die Handhabungsanlage 10 eine Unterdruckerzeugungseinrichtung (nicht dargestellt) umfassen.

Der Schlauchheber 12 umfasst außerdem einen Endeffektor 22 zum Greifen eines Gegenstands. Im dargestellten Beispiel ist der Endeffektor 22 als Sauggreifvorrichtung 24 zum Ansaugen eines Gegenstands (nicht dargestellt) ausgebildet.

Beispielhaft und bevorzugt ist der Endeffektor 22 über eine Verbindungsstange 28 mit einem unteren Ende des Hubschlauchs 16 verbunden. An einem oberen Ende (nicht dargestellt) des Hubschlauchs 16 kann dieser mit einem Gerüst oder Träger (nicht dargestellt) verbunden sein.

Die Verbindungsstange 28 erstreckt sich entlang einer Steuerachse 27. In der Figur 1 dargestellten Konfiguration ist die Steuerachse 27 insbesondere kollinear zu der Hubschlauch-Längsachse 18 angeordnet. Die Verbindungsstange 28 ist im Beispiel an einem ersten (unteren) Ende 30 mit dem Endeffektor 22 verbunden und an einem zweiten (oberen) Ende 32 an dem Hubschlauch 16 angeordnet.

Die Verbindungsstange 28 umfasst im Beispiel eine innenliegende Fluidführung (nicht sichtbar) zur Versorgung des Endeffektors 22 mit Unterdruck. Die Fluidführung erstreckt sich beispielhaft und bevorzugt von dem ersten Ende 30 zu dem zweiten Ende 32 der Verbindungsstange 28, wobei die Fluidführung an dem ersten Ende 30 mit dem Endeffektor 22 und an dem zweiten Ende 32 mit dem Schlauchinnenraum 20 des Hubschlauchs 16 strömungsverbunden ist. Somit kann der Endeffektor 22 durch den Schlauchinnenraum 20 des Hubschlauchs 16 hindurch mit Unterdruck versorgt werden (nachfolgend noch näher erläutert). Bei nicht dargestellten Ausgestaltungen kann die Fluidführung auch außerhalb der Verbindungsstange 28 verlaufen.

Der Schlauchheber 12 ist über eine Kopplungseinrichtung 34 an den Manipulator 14 wiederholbar lösbar ankoppelbar. Die Figur 1 zeigt dabei die Kopplungseinrichtung 34 in einem verbundenen Zustand von Manipulator 14 und Schlauchheber 12.

Die Kopplungseinrichtung 34 umfasst einen Schlauchheber-seitigen ersten Kopplungsabschnitt 36 und einen Manipulator-seitigen zweiten Kopplungsabschnitt 38 (nachfolgend noch näher beschrieben).

Der erste Kopplungsabschnitt 36 ist im Beispiel über einen Steuerhebel 42 an dem Hubschlauch 16 gehaltert (nachfolgend noch mit Detail erläutert). Der Manipulator-seitige zweite Kopplungsabschnitt 38 ist mit dem Manipulator 14 vorzugsweise fest verbunden, beispielsweise über eine Halterung 40.

Wie in Figur 1 erkennbar, ist der erste Kopplungsabschnitt 36 beispielhaft und bevorzugt zwischen dem ersten Ende 30 der Verbindungsstange 28 und dem zweiten Ende 32 der Verbindungsstange 28 angeordnet. Der erste Kopplungsabschnitt 36 ist translatorisch entlang der Steuerachse 27 verlagerbar an der Verbindungsstange 28 angeordnet. Insbesondere ist der erste Kopplungsabschnitt 36 auch rotatorisch um die Steuerachse 27 verlagerbar.

Beispielhaft umgreift der erste Kopplungsabschnitt 36 die Verbindungsstange 28, sodass der erste Kopplungsabschnitt 36 entlang der Steuerachse 27 relativ zu der Verbindungsstange 28 verlagerbar ist und insbesondere die Verbindungsstange 28 relativ zu dem ersten Kopplungsabschnitt 36 um die Steuerachse 27 drehbar ist. Insofern kann eine Verlagerungsbewegung des Manipulators 14 in einer zu der Steuerachse 27 orthogonalen Ebene auf den Hubschlauch 16 übertragen werden (beispielsweise um den Endeffektor 22 an eine gewünschte Ablageposition für einen gegriffenen Gegenstand zu verfahren). Eine Verlagerungsbewegung des Manipulators 14 entlang der Steuerachse 27 führt hingegen zu einer axialen Verschiebung des ersten Kopplungsabschnitt 36 relativ zu dem Hubschlauch 16.

Der erste und der zweite Kopplungsabschnitt 36, 38 sind beispielshaft über eine Verbindungseinrichtung 44 wiederholbar lösbar miteinander verbindbar und somit Manipulator 14 und Schlauchheber 12 wiederholbar lösbar aneinander ankoppelbar.

Im dargestellten Beispiel umfasst die Verbindungseinrichtung 44 einen bedarfsweise aktivierbaren oder deaktivierbar Elektromagneten (beispielhaft in dem ersten und/oder zweiten Kopplungsabschnitt 36, 38 integriert). Wie vorstehend erwähnt, ist der Elektromagnet derart ausgebildet und angeordnet, dass in einem aktivierten Betriebszustand des Elektromagneten der erste und der zweite Kopplungsabschnitt 36, 38 miteinander verbunden sind und in einem deaktivierten Betriebszustand des Elektromagneten der erste und der zweite Kopplungsabschnitt 36, 38 voneinander, insbesondere werkzeugfrei, lösbar sind. Um den Elektromagnet auch bei einem Energieausfall zumindest kurzzeitig mit Strom zu versorgen, kann die Verbindungseinrichtung 44 optional einen Energiespeicher (nicht dargestellt), insbesondere in Form eines Kondensators, aufweisen. Bei nicht dargestellten Ausgestaltungen kann die Verbindungseinrichtung 44 auch andere Verbindungsmechanismen umfassen.

Wie vorstehend erwähnt, ist der erste Kopplungsabschnitt 36 über einen Steuerhebel 42 an dem Hubschlauch 16 gehaltert. Der Steuerhebel 42 ist insbesondere dazu ausgebildet, eine Ventileinrichtung 70 des Hubschlauchs 16 anzusteuern.

Im konkreten Beispiel umfasst die Ventileinrichtung 70 ein Hubschlauch-Belüftungsventil 72, welches dazu ausgebildet ist, den Schlauchinnenraum 20 des Hubschlauchs 16 bedarfsweise mit einer Umgebung zu verbinden und somit ein Einströmen von Umgebungsluft in den Schlauchinnenraum 20 zu ermöglichen. Auf diese Weise kann eine Längenänderung des Hubschlauchs 16 gesteuert werden.

Die Ventileinrichtung 70 kann außerdem ein optionales Endeffektor-Belüftungsventil (nicht dargestellt) umfassen, welches dazu ausgebildet ist, eine Strömungsverbindung zwischen Schlauchinnenraum 20 und Endeffektor 22 (im Beispiel durch die Verbindungsstange 28 hindurch) wahlweise freizugeben oder abzusperren.

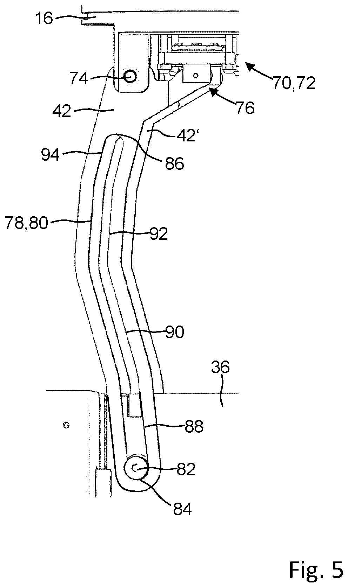

Wie in Fig. 5 im Detail gezeigt, ist der Steuerhebel 42 um eine Steuerhebel-Schwenkachse 74 schwenkbar an dem Hubschlauch 16 gehaltert. Der Steuerhebel 42 ist mit einem Betätigungsabschnitt 76 mit dem Hubschlauch-Belüftungsventil 72 derart gekoppelt, dass durch Verschwenken des Steuerhebels 42 um die Steuerhebel-Schwenkachse 74 eine Belüftungsstellung des Hubschlauch-Belüftungsventil 72 veränderbar ist.

Beispielhaft kann das Hubschlauch-Belüftungsventil 72 als Belüftungsklappe ausgebildet sein, deren Öffnungswinkel durch Veränderung einer Schwenkbewegung des Steuerhebels 42 um die Steuerhebel-Schwenkachse 74 veränderbar ist.

Eine Schwenkbewegung des Steuerhebels 42 um die Steuerhebel-Schwenkachse 74 ist durch eine axiale Verlagerung des ersten Kopplungsabschnitts 36 entlang der Steuerachse 27 antreibbar.

Im Konkreten weist der Steuerhebel 42 eine Steuerkurve 78 auf, welche im Beispiel als Steuerschlitz 80 in Form eines Langloches ausgebildet ist. Wie in Fig. 5 gezeigt, greift der erste Kopplungsabschnitt 36 mit einem Steuerglied 82 in die Steuerkurve 78 ein. Das Steuerglied 82 ist beispielhaft in Form einer Schraube oder Bolzens ausgebildet. Im Zuge einer axialen Bewegung des ersten Kopplungsabschnitts 36 entlang der Steuerachse 27 (in Figur 5 "nach oben" oder "nach unten") verfährt das Steuerglied 82 entlang der Steuerkurve 78 zwischen einer in Figur 5 dargestellten untersten Position (von dem Hubschlauch 16 entlang der Endeffektor-Drehachse 26 am weitesten entfernt), in welcher das Steuerglied 82 an dem unteren Ende 84 der Steuerkurve 78 anliegt, und einer obersten Position (nicht dargestellt), in welcher das Steuerglied 82 an dem oberen Ende 86 der Steuerkurve 78 anliegt.

Wie in Figur 5 gezeigt, weist die Steuerkurve 78 einen winkligen Verlauf auf, sodass eine axiale Bewegung des ersten Kopplungsabschnitts 36 entlang der Steuerachse 27 in eine Schwenkbewegung des Steuerhebels 42 um die Steuerhebel-Schwenkachse 74 übersetzt wird - und somit die Ventileinrichtung 70 betätigt wird.

Im konkreten Beispiel weist die Steuerkurve 78 einen ersten Steuerkurvenabschnitt 88, einen sich an den ersten Steuerkurvenabschnitt 88 anschließenden zweiten Steuerkurvenabschnitt 90, einen sich an den zweiten Steuerkurvenabschnitt 90 anschließenden dritten Steuerkurvenabschnitt 92 und einen sich an den dritten Steuerkurvenabschnitt 92 anschließenden vierten Steuerkurvenabschnitt 94 auf. Wie aus Fig. 5 ersichtlich, sind die Steuerkurvenabschnitte 88, 90, 92, 94 zueinander winklig angeordnet, selbst jedoch vorzugsweise gerade ausgebildet.

In Abhängigkeit der Neigung des jeweiligen Steuerkurvenabschnitts 88, 90, 92, 94 relativ zu der Steuerachse 27 führt eine Verlagerung des ersten Kopplungsabschnitts 36 entlang der Steuerachse 27 zu einer mehr oder weniger schnellen Öffnungs- oder Schließbewegung des Hubschlauch-Belüftungsventils 72.

In dem dargestellten Beispiel (vgl. Fig. 5) ist ein weiterer Steuerhebel 42' vorgesehen, welcher analog zu dem ersten Steuerhebel 42 ausgebildet ist. Bei nicht dargestellten Ausgestaltungen kann der weitere Steuerhebel 42' aber auch unterschiedlich ausgebildet sein, bspw. eine unterschiedliche geformte Steuerkurve 78 aufweisen. Bei wiederum anderen nicht dargestellten Ausgestaltungen kann aber auch nur ein einzelner Steuerhebel 42 vorgesehen sein.

In dem dargestellten Beispiel ist der Endeffektor 22 optional um eine, im Beispiel der Steuerachse 27 entsprechende, Endeffektor-Drehachse 26 relativ zu dem Hubschlauch 16 verdrehbar. Insbesondere ist die Verbindungsstange 28 relativ zu dem Hubschlauch 16 um die Endeffektor-Drehachse 26 drehbar. Beispielhaft kann die Verbindungsstange 28 an ihrem zweiten Ende 32 drehbar an dem Hubschlauch 16 gelagert sein.

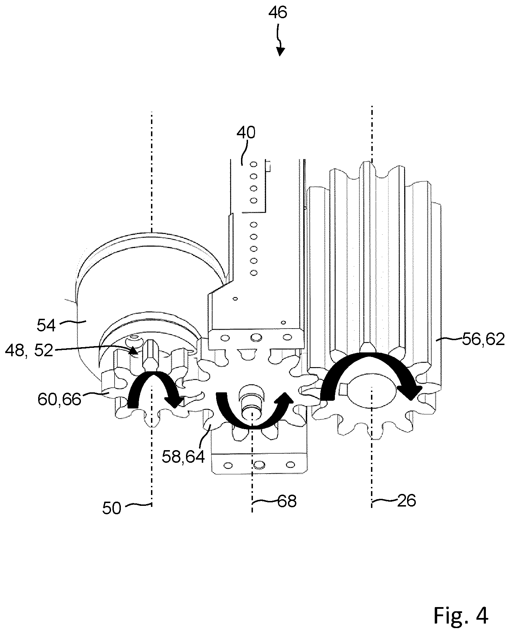

Die Kopplungseinrichtung 34 umfasst im Beispiel außerdem ein optionales Getriebe 46 (Detailansicht Fig. 4), welches dazu ausgebildet ist, eine Drehbewegung eines Drehglieds 48 des Manipulators 14 um eine Manipulator-Drehachse 50 in eine Drehbewegung des Endeffektors 22 um die Endeffektor-Drehachse 26 zu übersetzen.

Im dargestellten Beispiel ist das Drehglied 48 durch eine Roboterdrehachse 52 des Handgelenks 54 des Roboters 14 gebildet. Im Konkreten handelt es sich bei der Roboterdrehachse 52 um die entlang der kinematischen Kette des Roboters letzte Achse.

Eine beispielhafte und bevorzugte Ausgestaltung des Getriebes 46 wird nachfolgend unter Bezugnahme auf die Figur 4 erläutert.

Wie in Figur 4 erkennbar, umfasst das Getriebe 46 ein Endeffektor-seitiges erstes Übertragungsglied 56, ein Manipulator-seitiges zweites Übertragungsglied 58 sowie ein Manipulator-seitiges drittes Übertragungsglied 60. Im dargestellten Beispiel sind die Übertragungsglieder 56, 58, 60 jeweils als Zahnräder ausgebildet. Insofern umfasst das Getriebe 46 ein Endeffektor-seitiges erstes Zahnrad 62, ein Manipulator-seitiges zweites Zahnrad 64 und ein Manipulator-seitiges drittes Zahnrad 66. Bei nicht dargestellten Ausgestaltungen ist es aber auch denkbar, dass die Übertragungsglieder 54, 56, 58 in Form von Reibrädern ausgebildet sind.

Das Endeffektor-seitige erste Zahnrad 62 ist im Beispiel konzentrisch um die Verbindungsstange 28 angeordnet und mit dieser drehfest um die Endeffektor-Drehachse 26 verbunden. Insofern wird eine Drehbewegung des ersten Zahnrads 62 um die Endeffektor-Drehachse 26 in eine Drehbewegung der Verbindungsstange 28 und somit des Endeffektors 22 um die Endeffektor-Drehachse 26 übertragen.

Das Manipulator-seitige dritte Zahnrad 66 ist mit dem Drehglied 48 (Roboterdrehachse 52) drehfest gekoppelt und somit um die Manipulator-Drehachse 50 angetrieben.

Wie in Figur 4 gezeigt, ist das zweite Zahnrad 64 dazu ausgebildet, ein Drehmoment zwischen erstem Zahnrad 62 und drittem Zahnrad 66 zu übertragen. Beispielhaft ist das zweite Zahnrad 64 um eine zu der Manipulator-Drehachse 50 parallele Drehachse 68 an dem zweiten Kopplungsabschnitt 38, insbesondere der Halterung 40, gehaltert.

Im verbundenen Zustand von erstem und zweitem Kopplungsabschnitt 36, 38 (also dann, wenn der erste Kopplungsabschnitt 36 und der zweite Kopplungsabschnitt 38 mittels der Verbindungseinrichtung 44 miteinander verbunden sind), stehen das erste Zahnrad 62 und das zweite Zahnrad 64 in kämmendem Eingriff miteinander (vgl. Fig. 4), sodass ein Drehmoment zwischen Roboterdrehachse 52 und Endeffektor 22 übertragen werden kann. Wie vorstehend erwähnt, ist eine Drehbewegung des Endeffektors 22 um die Endeffektor-Drehachse 26 insofern von einer Bewegung des ersten und des zweiten Kopplungsabschnitts 36, 38 entkoppelt. Mit anderen Worten kann auch bei ansonsten feststehendem Manipulator 14 (also ohne Bewegung einer der weiteren Roboterachsen) eine Drehbewegung des Endeffektors 22 um die Endeffektor-Drehachse 26 realisiert werden.

Das erste Zahnrad 62 und der erste Kopplungsabschnitt 36 sind relativ zueinander entlang der Endeffektor-Drehachse 26 verlagerbar. Da im verbundenen Zustand von erstem und zweitem Kopplungsabschnitt 36, 38 der erste Kopplungsabschnitt 36 mit dem zweiten Zahnrad 64 und dem dritten Zahnrad 66 bewegungsgekoppelt ist, führt eine Verlagerungsbewegung des Manipulators 14 entlang der Endeffektor-Drehachse 26 zu einer Relativbewegung von dem zweitem Zahnrad 64 relativ zu dem ersten Zahnrad 62. Eine solche Relativbewegung im kämmenden Zustand der Zahnräder 62, 64 ist beispielhaft dadurch realisiert, dass das erste Zahnrad 62 eine Längserstreckung entlang der Endeffektor-Drehachse 26 derart auf, dass das zweite Zahnrad 64, unter Beibehaltung einer Drehmomentübertragung, entlang der Endeffektor-Drehachse 26 relativ zu dem ersten Zahnrad 62 verschiebbar ist (vgl. Figuren 1 und 4).

## Patentansprüche

1. Handhabungsanlage (10), umfassend:
- einen Schlauchheber (12), mit
o einem Hubschlauch (16), welcher einen Schlauchinnenraum (20) aufweist,
o einem Endeffektor (22), insbesondere Sauggreifvorrichtung (24), und
o einer, insbesondere an oder in dem Hubschlauch (16) angeordneten, Ventileinrichtung (70) zur Steuerung von Strömungsverbindungen;
- einen Manipulator (14), insbesondere Roboter, zum Verlagern des Endeffektors (22);
- eine Kopplungseinrichtung (34) zur Ankopplung des
Schlauchhebers (12) an den Manipulator (14),
wobei die Kopplungseinrichtung (34) einen Schlauchheber-seitigen ersten Kopplungsabschnitt (36) und einen Manipulator-seitigen zweiten Kopplungsabschnitt (38) aufweist, wobei der erste und der zweite Kopplungsabschnitt (36, 38) mittels einer Verbindungseinrichtung (44), insbesondere wiederholbar lösbar, miteinander verbindbar sind, wobei der erste Kopplungsabschnitt (36) entlang einer Steuerachse (27) axial verlagerbar an dem Hubschlauch (16) gehaltert ist, wobei der erste Kopplungsabschnitt (36) mit der Ventileinrichtung (70) derart zusammenwirkt, dass durch Verschieben des ersten Kopplungsabschnitts (36) entlang der Steuerachse (27) die Ventileinrichtung (70) betätigbar, insbesondere steuerbar, ist.

2. Handhabungsanlage (10) nach Anspruch 1, wobei die Verbindungseinrichtung (44) derart ansteuerbar ausgebildet ist, dass sie wahlweise aktivierbar oder deaktivierbar ist, wobei eine Steuerung, insbesondere Manipulator-Steuerung, zum Ansteuern der Verbindungseinrichtung (44) vorgesehen ist.

3. Handhabungsanlage (10) nach Anspruch 1 oder 2, wobei die Verbindungseinrichtung (44) wenigstens einen bedarfsweise aktivierbaren oder deaktivierbaren Elektromagneten aufweist, insbesondere derart, dass in einem aktivierten Zustand des wenigstens einen Elektromagneten der erste und der zweite Kopplungsabschnitt (36, 38), miteinander verbunden sind, und in einem deaktivierten Zustand des wenigstens einen Elektromagneten der erste und der zweite Kopplungsabschnitt (36, 38) voneinander werkzeugfrei lösbar sind.

4. Handhabungsanlage (10) nach einem der vorherigen Ansprüche, wobei die Ventileinrichtung (70) ein Hubschlauch-Belüftungsventil (72) zum Belüften des Schlauchinnenraums (20) des Hubschlauchs (16) aufweist, wobei der erste Kopplungsabschnitt (36) mit dem Hubschlauch-Belüftungsventil (72) derart zusammenwirkt, dass durch Verschieben des ersten Kopplungsabschnitts (36) entlang der Steuerachse (27) eine Belüftungsstellung des Hubschlauch-Belüftungsventils (72) veränderbar ist, insbesondere das Hubschlauch-Belüftungsventil (72) wahlweise geöffnet und geschlossen werden kann.

5. Handhabungsanlage nach einem der vorherigen Ansprüche, wobei der erste Kopplungsabschnitt (36) über einen Steuerhebel (42) mit der Ventileinrichtung (70) gekoppelt ist, wobei der Steuerhebel (42) um eine Steuerhebel-Schwenkachse (74) schwenkbar an dem Hubschlauch (16) gehaltert ist,
wobei der Steuerhebel (42) mit der Ventileinrichtung (70) derart zusammenwirkt, dass die Ventileinrichtung (70) durch Verschwenken des Steuerhebels (42) um die Steuerhebel-Schwenkachse (74) betätigbar ist, wobei der Steuerhebel (42) durch axiale Verlagerung des ersten Kopplungsabschnitts (36) entlang der Steuerachse (27) um die Steuerhebel-Schwenkachse (74) schwenkbar ist.

6. Handhabungsanlage (10) nach dem vorherigen Anspruch, wobei der Steuerhebel (42) eine Steuerkurve (78), insbesondere in Form eines Langlochs, aufweist, wobei an dem ersten Kopplungsabschnitt (36) wenigstens ein Steuerglied (82) vorgesehen ist, welches in die Steuerkurve (78) eingreift, wobei in Abhängigkeit einer Position des Steuerglieds (82) entlang der Steuerkurve (78) eine Schwenklage des Steuerhebels (42) um die Steuerhebel-Schwenkachse (74) veränderbar, insbesondere einstellbar, ist.

7. Handhabungsanlage (10) nach dem vorherigen Anspruch, wobei die Steuerkurve (78) einen ersten Steuerkurvenabschnitt (88), insbesondere ersten Endabschnitt (84), und einen zweiten Steuerkurvenabschnitt (94), insbesondere zweiten Endabschnitt (86), derart aufweist, dass die Ventileinrichtung (70), insbesondere das Hubschlauch-Belüftungsventil (72), dann, wenn sich das Steuerglieds (82) in dem ersten Steuerkurvenabschnitt (88) befindet, eine erste Ventilstellung, insbesondere erste Belüftungsstellung, einnimmt, und dann, wenn sich das Steuerglieds (82) in dem zweiten Steuerkurvenabschnitt (94) befindet, eine zweite Ventilstellung, insbesondere zweite Belüftungsstellung, einnimmt, insbesondere wobei die Ventileinrichtung (70) in der ersten Ventilstellung, weiter geöffnet ist als in der zweiten Ventilstellung.

8. Handhabungsanlage (10) nach einem der Ansprüche 6 oder 7, wobei der erste Kopplungsabschnitt (36) an dem Hubschlauch (16) derart gehaltert ist, dass sich der erste Kopplungsabschnitt (36) im getrennten Zustand von erstem und zweitem Kopplungsabschnitt (36, 38) in einer Ruhekonfiguration entlang der Steuerachse (27) befindet oder in diese schwerkraftbedingt überführt wird, wobei der erste Kopplungsabschnitt (36) in dieser Ruhekonfiguration derart mit der Ventileinrichtung (70), insbesondere dem Hubschlauch-Belüftungsventil (72), zusammenwirkt, dass die Ventileinrichtung (70), insbesondere das Hubschlauch-Belüftungsventil (72), zumindest teilweise geöffnet ist.

9. Handhabungsanlage (10) nach einem der vorherigen Ansprüche, wobei der Endeffektor (22) über eine Verbindungsstange (28) mit dem Hubschlauch (16) verbunden ist, wobei der erste Kopplungsabschnitt (36) entlang der Steuerachse (27) verlagerbar an der Verbindungstange (28) angeordnet ist.

10. Handhabungsanlage (10) nach einem der vorherigen Ansprüche, wobei der Endeffektor (22) um eine, insbesondere zu der Steuerachse (27) parallele oder dieser entsprechenden, Endeffektor-Drehachse (26) drehbar an dem Hubschlauch (16), insbesondere über die Verbindungsstange (28), gehaltert ist, wobei der Manipulator (14) ein angetriebenes Drehglied (48) aufweist, welches um eine Manipulator-Drehachse (50) drehbar ist,
wobei die Kopplungseinrichtung (34) ein Getriebe (46) umfasst, welches dazu ausgebildet ist, um im verbundenen Zustand von erstem und zweitem Kopplungsabschnitt (36, 38) eine Drehbewegung des Drehglieds (48) um die Manipulator-Drehachse (50) in eine Drehbewegung des Endeffektors (22) um die Endeffektor-Drehachse (26) zu übersetzen.

11. Handhabungsanlage (10) nach Anspruch 10, wobei das Getriebe (46) derart ausgebildet ist, dass eine Drehbewegung des Endeffektors (22) um die Endeffektor-Drehachse (26) von einer Bewegung des ersten und des zweiten Kopplungsabschnitts (36, 38) entkoppelt ist.

12. Handhabungsanlage (10) nach einem der Ansprüche 10 oder 11, wobei der Manipulator (14) als Roboter, insbesondere 6-Achs-Roboter, mit einem Roboterarm und einem Roboterhandgelenk (54) ausgebildet ist, wobei das Drehglied (48) durch eine Roboterdrehachse (52) des Roboterhandgelenks (54), insbesondere durch die entlang der kinematischen kette letzte Achse des Roboters, angetrieben ist.

13. Handhabungsanlage (10) nach einem der Ansprüche 10 bis 12, das Getriebe (46) umfassend:
- ein Endeffektor-seitiges erstes Übertragungsglied (56), insbesondere erstes Zahnrad (62), welches mit dem Endeffektor (22) um die Endeffektor-Drehachse (26) drehfest gekoppelt ist,
- ein Manipulator-seitiges zweites Übertragungsglied (58), insbesondere zweites Zahnrad (64), welches über das Drehglied (48) des Manipulators (14) angetrieben ist, wobei das erste Übertragungsglied (56) und das zweite Übertragungsglied (58), insbesondere das erste Zahnrad (62) und das zweite Zahnrad (64), im verbundenen Zustand von erstem und zweitem Kopplungsabschnitt (36, 38) miteinander in Eingriff stehen, insbesondere miteinander kämmen
- (optional) ein Manipulator-seitiges drittes Übertragungsglied (60), insbesondere drittes Zahnrad (66), welches mit dem Drehglied (48) drehfest gekoppelt ist und mit dem zweiten Übertragungsglied (58), insbesondere zweiten Zahnrad (64), derart in, insbesondere kämmenden, Eingriff steht, dass das zweite Übertragungsglied (58), insbesondere zweites Zahnrad (64), durch das dritte Übertragungsglied (60), insbesondere drittes Zahnrad (66), antreibbar ist.

14. Handhabungsanlage (10) nach dem vorherigen Anspruch, wobei das erste Übertragungsglied (56), insbesondere das erste Zahnrad (62), eine Längserstreckung entlang der Endeffektor-Drehachse (26) derart aufweist, dass das zweite Übertragungsglied (58), insbesondere das zweite Zahnrad (64), in Eingriff, insbesondere im kämmenden Zustand, axial entlang der Endeffektor-Drehachse (26) relativ zu dem ersten Übertragungsglied (56), insbesondere zu dem ersten Zahnrad (62), verschiebbar ist.

15. Handhabungsanlage (10) nach einem der Ansprüche 13 oder 14 bei Rückbezug auf Anspruch 9, wobei das erste Übertragungsglied (56), insbesondere erste Zahnrad (62), koaxial zu der Verbindungsstange (28) angeordnet ist und/oder mit der Verbindungsstange (28) drehfest verbunden ist.
